# EUROPÄISCHE PATENTSCHRIFT

(11) **EP 4 197 074 B1**
(45) Veröffentlichungstag und Bekanntmachung des Hinweises auf die Patenterteilung: **28.02.2024**
(21) Anmeldenummer: 21743104.8
(22) Anmeldetag: 07.07.2021
(51) Int. Cl.: H02G 3/22, B60R 16/02, F16L 5/10, H02G 15/013, H01B 17/58

(54) **DICHTUNG FÜR EIN ELEKTRISCHES KABEL**
SEAL FOR AN ELECTRIC CABLE
JOINT D'ÉTANCHÉITÉ POUR UN CÂBLE ÉLECTRIQUE

(30) Priorität: 13.08.2020 DE 102020004934
(43) Veröffentlichungstag der Anmeldung: 21.06.2023
(73) Patentinhaber: Auto-Kabel Management GmbH, 79688 Hausen i.W. (DE)
(72) Erfinder: KASZUBOWSKI, Franz-Heinz, 41849 Wassenberg (DE); LIENERT, Andreas, 41844 Wegberg-Arsbeck (DE); BAGHERI, Abdolrahman, 52078 Aachen (DE)
(74) Vertreter: Cohausz & Florack
(86) Internationale Anmeldenummer: PCT/EP2021/068844
(87) Internationale Veröffentlichungsnummer: WO 2022/033776

(56) Entgegenhaltungen:
- EP-A1- 0 823 763
- EP-A1- 3 279 537
- EP-B1- 0 823 763
- CN-U- 210 830 473
- DE-A1- 4 341 384
- DE-C2- 4 341 384
- JP-A- H08 107 620
- US-A- 5 155 303
- US-A1- 2018 265 018
- US-B1- 6 438 828

## Beschreibung

Der Gegenstand betrifft eine Dichtung für ein elektrisches Kabel sowie ein Gehäuse mit einer solchen Dichtung.

Die Abdichtung elektrischer Kabel, insbesondere in automotiven Anwendungen, hat enorme Relevanz für die Haltbarkeit der elektrischen Installation. Gerade in automotiven Anwendungen, in denen der Verkabelungsaufwand stetig steigt, werden hohe Anforderungen an die Abdichtungen von Kabeleinführungen in Gehäuse gestellt. Dies liegt an der einerseits dynamischen Belastungssituation der Kabeleinführung in die Gehäuse und andererseits an der hohen Belastung durch korrosive Stoffe, wie beispielsweise salzhaltiges Wasser. Es muss verhindert werden, dass längs des Kabels Feuchtigkeit durch die Dichtung in ein Gehäuse gelangt und die dort angeordnete elektrische(n) Verbindung(en) angreift.

Der zunehmende Verkabelungsaufwand führt dazu, dass unterschiedlichste Kabelgeometrien gleichzeitig in einem Fahrzeug eingebaut werden. So ist es durchaus denkbar, dass in einem Bordnetz eines Kraftfahrzeugs neben Rundleitern gleichzeitig Flachleiter verbaut sind. Rund- und Flachleiter haben unterschiedlichste Querschnittsgeometrien, müssen jedoch gleichsam dicht in ein Gehäuse eingeführt werden können.

Die Veröffentlichung EP 3 279 537 A1 zeigt ein Dichtungselement, das eine Abweichung der Ausrichtung oder Anordnung von Elementen, z.B. einer Behandlungsvorrichtung für elektrolytische oder nasschemische Behandlung, ausgleicht.

Die Veröffentlichung EP 0 823 763 A1 betrifft eine Tülle zum Abdichten einer Öffnung in einer Platte, durch die mindestens ein Kabel verläuft, und insbesondere eine Tülle, die in der Automobilindustrie zum Abdichten einer Öffnung in einer Platte verwendet wird, die den Motorraum vom Fahrgastraum gegen Wasser, Hitze und Schmutz trennt und durch die mindestens ein Kabel oder eine Verkabelung verläuft.

Die Veröffentlichung US 5 155 303 A betrifft einen Kabelverschluss, der mindestens eine Tülle mit verbesserter Dichtungsfähigkeit umfasst.

Die Veröffentlichung US 6 438 828 B1 bezieht sich auf eine Anordnung und ein Verfahren zum Abdichten eines Kabelbaums, der durch eine Tülle verläuft, die in einem Durchgangsloch in einer Platte eines Kraftfahrzeugs installiert ist.

Die Veröffentlichung JP H 08 107620 A betrifft eine Tülle, die in ein Loch in einem Karosserieblech eines Kraftfahrzeugs oder dergleichen eingesetzt wird, um elektrische Drähte zu halten.

Die Veröffentlichung CN 210 830 473 U gehört zum technischen Gebiet der Motorwellendichtungen, insbesondere zu einer Motorwellendichtung.

Ausgehend von diesem Stand der Technik lag dem Gegenstand die Aufgabe zugrunde, eine Dichtung zur Verfügung zu stellen, welche bei unterschiedlichsten Kabelgeometrien eine sichere Dichtung gegenüber Eintritt von Längswasser ermöglicht.

Diese Aufgabe wird durch eine Dichtung nach Anspruch 1 sowie ein Gehäuse nach Anspruch 14 gelöst.

Die gegenständliche Dichtung als auch das gegenständliche Gehäuse wird insbesondere in automotiven Bordnetzen eingesetzt. Automotive Bordnetze sind insbesondere Bordnetze von Kraftfahrzeugen, insbesondere von Pkw oder Lkw, jedoch auch Zweiräder und andere motorisch betriebene Fahrzeuge.

Das elektrische Kabel hat in der Regel eine metallische Kabelseele, welche aus Vollmaterial oder aus Litzen gebildet ist und einen diese Seele umgebenden Isolator. Ein elektrisches Kabel wird zur Kontaktierung mit weiteren Kabeln oder elektrischen Bauteilen in der Regel stirnseitig abisoliert. Das dann blanke Metall der Kabelseele wird mit dem anderen Bauteil verbunden, insbesondere formschlüssig und/oder stoffschlüssig durch beispielsweise Verschrauben, Verlöten, Verschweißen oder dergleichen. Der Übergang zwischen den beiden metallischen Bauteilen ist vor Korrosion zu schützen.

Häufig ist ein solcher Übergang innerhalb eines Gehäuses, welches an sich wasserdicht ist. Jedoch stellt die Einführung des Kabels in das Gehäuse eine Herausforderung hinsichtlich der Wasserdichtigkeit dar. Ein elektrisches Kabel wird mit seinem Isolator in der Regel durch eine Tülle in ein Gehäuse eingeführt. Die Tülle hat einen Durchgangskanal, durch den sich das Kabel erstreckt. Der Durchgangskanal einer Tülle erstreckt sich von einer ersten Stirnseite hin zu einer zweiten Stirnseite der Tülle. Dieser Durchgangskanal ist umschrieben durch eine innere Mantelfläche der Tülle. Diese innere Mantelfläche dient in der Regel zur Abdichtung des Kabels.

Bekannt ist es beispielsweise, eine Tülle oder einen Schrumpfschlauch so zu dimensionieren, dass diese an den Leitungsquerschnitt des Kabels samt Isolator angepasst sind und das Kabel in einer Presspassung in die Tülle eingeschoben wird. Dies funktioniert natürlich nur für ein Kabel einer bestimmten Querschnittsgeometrie.

Um gegenüber einem Schrumpfschlauch verbesserte Dichtwirkung zu erreichen, weist eine Tülle in der Regel zumindest zwei in Längsrichtung voneinander beabstandete, an der inneren Mantelfläche der Tülle angeordnete, nach innen weisende Dichtlippen auf. Die Dichtlippen sind bevorzugt vollständig umlaufend und liegen eng an dem Kabel an. Die Dichtlippen ermöglichen es, dass sich die innere lichte Weite der Tülle an verschiedene Kabelquerschnitte anpassen kann. Die Dichtlippen haben in etwa gleiche Materialstärken wie der Rest der Mantelfläche und sind elastisch verformbar. Die Dichtlippen weisen radial nach innen weisen. Die Dichtlippen können sich besser elastisch radial nach außen verformen als die Mantelfläche der Tülle selbst. Dadurch liegen die Dichtlippen enger an dem Kabel an als nur eine gewöhnliche Tülle. Dies gilt insbesondere bei Unregelmäßigkeiten am Außenumfang des Kabels, bei denen die Dichtlippen nach wie vor eine Dichtwirkung ermöglichen.

Aber auch diese Maßnahmen reichen nicht immer aus, so dass dem Gegenstand die Aufgabe zugrunde lag, ausgehend von bekannten Dichtungen die Dichtwirkung zu verbessern.

Diese Aufgabe wird unter Berücksichtigung der Merkmale des Oberbegriffs durch eine Dichtung nach Anspruch 1 sowie ein Gehäuse nach Anspruch 14 gelöst.

Für eine gegenüber herkömmlichen Tüllen optimierte Dichtwirkung, aber auch für eine Anpassung der Dichtung an verschiedenartige Kabelquerschnitte des zu dichtenden Kabels, weist die gegenständliche Tülle zumindest zwei in Längsrichtung nebeneinander angeordnete, durch einen umlaufenden Trennbereich voneinander beabstandete Dichtbereiche auf. Diese beiden Dichtbereiche sind an den jeweiligen Stirnseiten der Tülle angeordnet, wobei ein erster Dichtbereich der Dichtbereiche der ersten Stirnseite zugewandt ist und ein zweiter Dichtbereich der Dichtbereiche der zweiten Stirnseite zugewandt ist. Durch den Trennbereich, der eine geringere Wandstärke der Mantelfläche der Tülle aufweist als die Mantelfläche der Tülle in den Dichtbereichen, wird erreicht, dass sich bei dynamischen Belastungen die Dichtbereiche relativ zueinander bewegen können, ohne dass eine Bewegung in dem ersten Dichtbereich zu einer maßgeblichen Beeinträchtigung der Dichtwirkung in dem zweiten Dichtbereich führt und/oder umgekehrt. Die Wandstärke bezieht sich auf die Tülle, insbesondere die Wandstärke der Mantelfläche der Tülle, insbesondere der Abstand zwischen innerer und äußerer Mantelfläche der Tülle. Die geringere Wandstärke führt dazu, dass im Trennbereich eine erhöhte Elastizität der Tülle gegeben ist. Diese erhöhte Elastizität ermöglicht es, dass die Bereiche sowohl in Längsrichtung als auch radial zur Längsrichtung gegeneinander beweglich sind.

Gemäß einem Ausführungsbeispiel wird vorgeschlagen, dass der Trennbereich durch eine umlaufende, radial nach innen weisende Nut gebildet ist. Diese Nut ist an der äußeren Mantelfläche der Tülle angebracht und grenzt den ersten von dem zweiten Dichtbereich ab. Durch die Nut wird die Wandstärke der Tülle im Bereich des Nutgrundes gegenüber zumindest Teile das Rests der Tülle verringert, so dass die Tülle im Bereich der Nut flexibler ist, als im Bereich abseits der Nut. Es wird vorgeschlagen, dass die Nut eine Hohlkehle ist.

Gemäß einem Ausführungsbeispiel wird vorgeschlagen, dass die Nut ausgehend von dem ersten Dichtbereich durch eine radial nach innen verlaufende erste Flanke hin zu dem zweiten Dichtbereich durch eine radial nach außen verlaufenden Flanke gebildet ist. Die Flanken bilden die Nutwände. Die äußere Mantelfläche erstreckt sich im ersten Dichtbereich zunächst im Wesentlichen parallel zur Längsachse der Tülle. Hin zur Nut verläuft die äußere Mantelfläche dann entlang der ersten Flanke zumindest teilweise radial nach innen. Ausgehend vom Nutgrund verläuft die äußere Mantelfläche entlang der zweiten Flanke radial nach außen hin zu dem zweiten Dichtbereich, in dem sich die äußerste Mantelfläche im Wesentlichen wieder parallel zur Längsachse der Tülle erstreckt.

Für eine besonders gute Elastizität der beiden Dichtbereiche relativ zueinander wird vorgeschlagen, dass die erste Flanke um einen größeren Winkel zur Längsachse geneigt ist als die zweite Flanke.

Gemäß einem Ausführungsbeispiel wird vorgeschlagen, dass in jedem der Dichtbereiche Dichtlippen angeordnet sind. Wie eingangs bereits erläutert, sind an der inneren Mantelfläche der Tülle radial nach innen weisende Dichtlippen vorgesehen. Jeder der Dichtbereiche hat zumindest eine, bevorzugt zumindest zwei solcher Dichtlippen. Durch die Verjüngung im Trennbereich können die Dichtbereiche gegeneinander schwingen. Ist in jedem der Dichtbereiche jeweils zumindest eine Dichtlippe angeordnet, kann eine verbesserte Dichtigkeit gegenüber Längswassereintritt erzielt werden.

Um zu gewährleisten, dass sich die Tülle am Kabel an der zweiten Stirnseite besonders eng anschmiegt, wird vorgeschlagen, dass sich die Wandstärke des zweiten Dichtbereichs in Richtung der zweiten Stirnseite verjüngt. Diese dann geringere Wandstärke führt zu einer höheren elastischen Flexibilität und somit einer besseren Anschmiegung der inneren Mantelfläche des zweiten Dichtbereichs an den Außenumgang des in der Tülle angeordneten Kabels.

Gemäß einem Ausführungsbeispiel wird vorgeschlagen, dass eine radial nach innen verlaufende Längsachse der Dichtlippen gegenüber einer senkrecht zu der Längsachse verlaufenden Querebene geneigt ist. Die Dichtlippen haben eine radiale, nach innen verlaufende Längserstreckung. Die Achse dieser Längserstreckung ist gegenüber einem Radius, der senkrecht zur Längsachse verläuft, geneigt. Dabei ist die Neigung insbesondere derart, dass die Dichtlippen in Richtung der zweiten Stirnseite geneigt sind. Diese Neigung der Dichtlippen gegenüber dem Radius ermöglicht es, dass die Dichtlippen mit einer größeren Auflagefläche an dem eingeschobenen Kabel anliegen. Eine besonders hohe Dichtigkeit gegenüber Längswassereintritt sowohl für Flachkabel als auch für Rundkabel wird erfindungsgemäß dadurch erreicht, dass zwei in Längsrichtung nebeneinander angeordnete Dichtlippen voneinander verschiedene Querschnittsprofile aufweisen. In einem Querschnitt durch die Dichtlippen in einer Ebene, die sich entlang der Längserstreckung der Dichtlippe und der Längsachse der Tülle aufspannt, können zwei nebeneinander angeordnete Dichtlippen voneinander unterschiedliche Querschnittsprofile aufweisen. Die unterschiedlichen Querschnittsprofile führen dazu, dass bei den unterschiedlichsten, häufig dynamischen Belastungssituationen stets zumindest eine der Dichtlippen eng an dem Kabel anliegt und so eine Dichtigkeit gewährleistet. Je nach Belastung des Kabels, sei es durch Biegung, Torsion, Scherung oder dergleichen, kann das Querschnittsprofil der Dichtlippe relevant für die Dichtigkeit dieser sein. Sind zwei nebeneinander angeordnete Dichtlippen mit unterschiedlichen Querschnittsprofilen gebildet, so ergibt sich eine optimierte Dichtigkeit.

Wie zuvor erläutert, sind die Dichtlippen gegenüber einer senkrecht zu der Längsachse verlaufenden Achse geneigt. Für eine besonders gute Dichtigkeit, insbesondere in Kombination mit unterschiedlichen Kabelquerschnitten, wird auch erfindungsgemäß definiert, dass zwei in Längsrichtung der Tülle nebeneinander angeordnete Dichtlippen voneinander verschieden zu der Querebene geneigt sind. Insbesondere ist der Neigungswinkel abwechselnd, so dass intermittierend jeweils einer von zumindest zwei Neigungswinkeln an den Dichtlippen realisiert ist.

Die unterschiedlichen Querschnittsprofile sind gemäß einem Ausführungsbeispiel derart, dass zumindest eine der Dichtlippen ein spitzzulaufendes Querschnittsprofil aufweist und dass zumindest eine der Dichtlippen ein bogenförmiges Querschnittsprofil aufweist. Jedes dieser Querschnittsprofile kann jeweils in einer n-ten Dichtlippe (n>=2) realisiert sein. Bogenförmig kann auch als ballig verstanden werden und spitz kann auch als pfeilförmig verstanden werden.

Gemäß einem Ausführungsbeispiel wird vorgeschlagen, dass sich eine jeweilige der Dichtlippen hin zu einer Stirnfläche erstreckende Seitenwände aufweist. Die Seitenwände erstrecken sich in Längserstreckung der Dichtlippe und verlaufen im Wesentlichen parallel zueinander. Es ist jedoch bevorzugt, dass die Länge der Seitenwände voneinander verschieden ist, wobei bevorzugt die der ersten Stirnseite zugewandte Seitenwand länger ist, als die der zweiten Stirnseite zugewandte Seitenwand. Durch diese unterschiedliche Gestaltung der Seitenwände, wird eine Neigung der Dichtlippen hin zu der zweiten Stirnseite erreicht. Die Dichtlippen liegen so bevorzugt mit ihrer der ersten Stirnseite zugewandten Seitenwand auf dem Kabel auf und dichten dies ab.

Gemäß einem Ausführungsbeispiel wird vorgeschlagen, dass eine jeweilige der Dichtlippen eine lichte Öffnung in dem Durchgangskanal aufspannt. In einem Querschnitt senkrecht zur Längsachse bilden die Dichtlippen den Durchgangskanal mit einer lichten Öffnung der Tülle. Die lichte Öffnung ist die Fläche, die in dem Durchgangskanal für das Kabel frei ist. Das Kabel wird in den Durchgangskanal eingeschoben. Bevorzugt unterscheidet sich die lichte Öffnung des Durchgangskanals im unverbauten Zustand der Tülle vom Querschnittsprofil des aufzunehmenden Kabels. Wird das Kabel in die lichte Öffnung eingeschoben, so verformt sich die Tülle elastisch und die Dichtlippen werden an den Außenumfang des Kabels angedrückt. Bevorzugt ist der Umfang der lichten Öffnung des Durchgangskanals kleiner als der Außenumfang des aufzunehmenden Kabels.

Die lichte Öffnung wird bevorzugt durch zwei einander gegenüberliegende Längsseiten und zwei aneinander gegenüberliegende Querseiten der Dichtlippe aufgespannt. D.h. dass die lichte Öffnung bevorzugt nicht rund oder oval ist, sondern im Wesentlichen rechteckig, wobei in dem jeweiligen Ecken Radien gebildet sein können, um eine besonders gute Anpassung der Dichtlippen an das aufzunehmende Kabel zu ermöglichen.

Wie bereits erläutert, ist die lichte Öffnung im Wesentlichen rechteckig, wobei an den Ecken Radien gebildet sein können. Hierzu wird insbesondere vorgeschlagen, dass ein Übergang zwischen einer Längsseite und einer Querseite einen Innenradius aufweist. Ein solcher Innenradius sollte in der Regel kleiner sein, als ein Außenradius des abzudichtenden Gegenstücks/Kabels.

Gemäß einem Ausführungsbeispiel wird vorgeschlagen, dass zumindest eine der Längsseiten radial nach innen gewölbt ist und/oder dass zumindest eine der Querseiten radial nach innen gewölbt ist. Zumindest eine Längs- und oder zumindest eine Querseite kann radial nach innen gewölbt sein. Eine Dichtlippe mit nach innen gewölbten Seiten kann sich abwechseln mit einer Dichtlippe mit parallel zueinander verlaufenden Seiten.

Zwischen dem ersten Dichtbereich und der ersten Stirnseite kann an der Tülle ein Faltenbalg angeordnet sein, um eine Bewegung der Tülle relativ zu dem die Tülle aufweisenden Gehäuse zu ermöglichen.

Zur Abdichtung der Tülle an einem Gehäuse wird vorgeschlagen, dass an der ersten Stirnseite ein radial nach außen verlaufender Flansch angeordnet ist. Der Flansch kann an dem Gehäuse angeordnet und mit der Gehäusewand verpresst werden. Durch den Flansch kann eine Aufnahme/Öffnung in dem Gehäuse gegenüber der Tülle abgedichtet werden.

Ein weiterer Aspekt ist ein Gehäuse mit einer zuvor beschriebenen Dichtung. Dieses Gehäuse hat eine Aufnahme/Öffnung zur Aufnahme eines Kabels. An dieser Aufnahme kann eine gegenständliche Tülle angeordnet sein, wobei diese von dem Gehäuse abstehend nach außen oder in das Gehäuse weisend nach innen an der Aufnahme angeordnet sein kann.

Gemäß einem Ausführungsbeispiel wird vorgeschlagen, dass der Flansch der Tülle zwischen einer Gehäusewand und einem Klemmelement verklemmt ist. Hierdurch wird die Tülle gegenüber dem Gehäuse abgedichtet. Der Flansch kann an der Innenseite des Gehäuses oder bevorzugt an der Außenseite des Gehäuses an der Gehäusewand anliegen und gegen diese gepresst sein. Der Flansch kann eine Abdichtung der Tülle gegenüber der Aufnahme gewährleisten.

Ein weiterer Aspekt ist ein System mit einem zuvor beschriebenen Gehäuse. Bei diesem System sind zumindest zwei Aufnahmen vorgesehen und jeweils an einer der Aufnahme angeordnete Dichtungen. Die Dichtungen sind so gebildet, dass eine erste Dichtung ein Rundkabel und eine zweite Dichtung ein Flachkabel dichtend aufnimmt.

Nachfolgend wird der Gegenstand anhand einer Ausführungsbeispiele zeigenden Zeichnung näher erläutert. In der Zeichnung zeigen:
- Fig. 1a, b: Ein Gehäuse mit einer Dichtungen gemäß Ausführungsbeispielen;
- Fig. 2: Eine Dichtung mit Tüllen gemäß Ausführungsbeispielen;
- Fig. 3a-c: Dichtungen mit Tüllen und eingeschobenen Kabeln gemäß Ausführungsbeispielen;
- Fig. 4a, b: Einen Längsschnitt durch eine Tülle gemäß einem Ausführungsbeispiel;
- Fig. 5: Eine Detailansicht einer Tülle gemäß einem Ausführungsbeispiel;
- Fig. 6: Eine schematische Darstellung von Dichtlippen gemäß einem Ausführungsbeispiel;
- Fig. 7: Eine Detailansicht von Dichtlippen gemäß einem Ausführungsbeispiel;
- Fig. 8a, b: Eine lichte Öffnung der Dichtlippen in einem Querschnitt gemäß einem Ausführungsbeispiel.

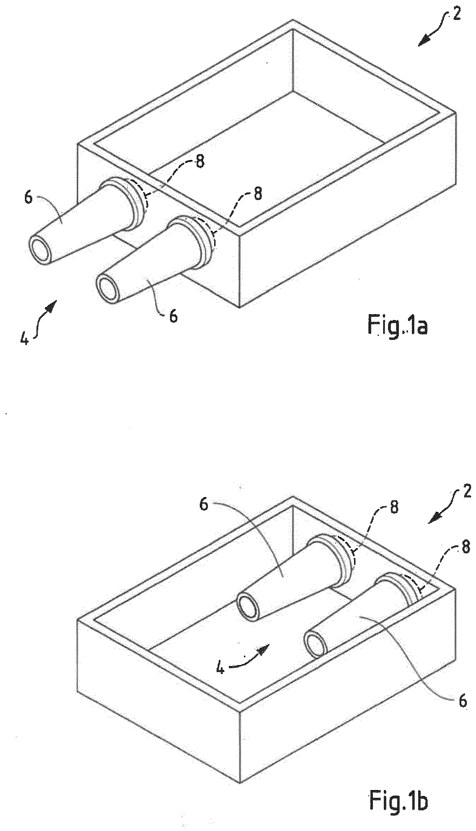

Fig. 1a zeigt ein Gehäuse 2. Das Gehäuse 2 kann beispielsweise ein Gehäuse eines elektrischen Anbauteils, ein Sicherungskasten, ein Verteilkasten, insbesondere für automotive Anwendungen oder dergleichen sein. Das Gehäuse 2 kann zur Aufnahme von Kabeln mit einer Dichtung 4 gebildet sein. Zur Aufnahme von Kabeln hat das Gehäuse 2 zumindest eine Öffnung 8, an der die Dichtung 4 angeordnet ist. Die Dichtung 4 kann eine oder mehrere Tüllen 6 aufweisen. Die Tüllen 6 sind unmittelbar an einer jeweiligen Öffnung 8 angeordnet.

In diesem Zusammenhang sei erwähnt, dass nachfolgend überwiegend Dichtungen 4 mit zwei Tüllen 6 gezeigt sind, dies jedoch rein beispielhaft ist. Dichtungen 4 mit einer Tülle 6 oder mehr als zwei Tüllen 6 fallen selbstverständlich unter den Gegenstand und alle hier gezeigten Ausführungsbeispiele gelten für entsprechende Anzahlen von Tüllen 6.

In der Fig. 1a ist gezeigt, dass die Tüllen 6 an den Öffnungen 8 nach außen weisend angeordnet sind, d.h., dass sie sich von dem Gehäuse 2 weg erstrecken. Die Anordnung der Dichtung 4 an dem Gehäuse 2 erfolgt über eine klemmende Aufnahme eines Flansches der Dichtung 4, wie nachfolgend noch gezeigt werden wird. Durch die Tüllen 6 kann jeweils ein Kabel mit seiner Isolation gesteckt werden und so durch die Öffnung 8 in das Innere des Gehäuses 2 geführt sein.

Fig. 1b zeigt ein weiteres Ausführungsbeispiel eines Gehäuses 2, bei dem jedoch die Tüllen 6 nach innen weisend am dem Gehäuse 2 angeordnet sind. Eine Kombination von Tüllen 6, die sowohl nach innen als auch nach außen weisend an verschiedenen Öffnungen 8 eines einzigen Gehäuse 2 angeordnet sind, ist ebenfalls möglich. Die Tüllen 6 der Dichtung 4 sind so konzipiert, dass sie eine besonders gute Dichtigkeit gegenüber Längswasser aufweisen und sowohl Flachkabel aus auch Rundkabel dichtend aufnehmen können.

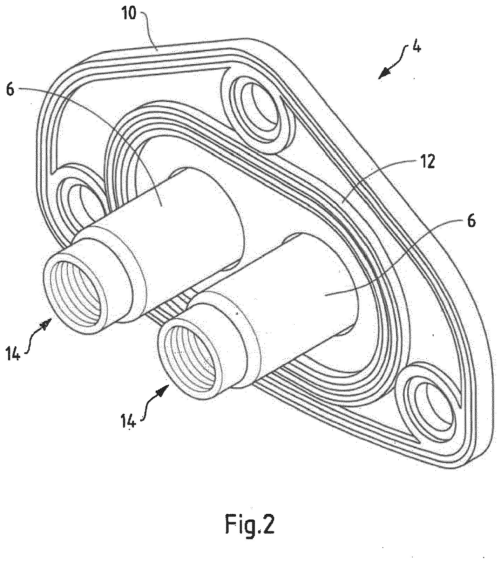

Fig. 2 zeigt eine Dichtung 4 in einem unbelasteten Zustand (ohne Kabel), so dass die Tüllen 6 der Dichtung 4 unbelastet und nicht verformt sind. Zu erkennen ist, dass die Tüllen 6 in einem Flansch 10 münden. Der Flansch 10 kann auf seiner Oberfläche in Richtung der Tüllen 6 weisende Vorsprünge 12 oder Rücksprünge aufweisen. Auch können auf der nicht gezeigten Oberfläche des Flansches 10 entsprechende Vorsprünge 12 vorgesehen sein. Die Tüllen 6 erstrecken sich ausgehend vom Flansch 10, in den sie in einer ersten (nicht gezeigten) Stirnseite münden, hin zu einer zweiten Stirnseite 14. Die Tüllen 6 haben dabei eine umlaufende Mantelfläche. Die Tülle spannt eine Durchgangsöffnung mit einer lichten Öffnung auf, in die, wie nachfolgend noch gezeigt werden wird, ein Kabel eingesteckt werden kann. Die Dichtung 4 wird so an einem Gehäuse 2 platziert, dass die Tüllen 6 an Öffnungen 8 angeordnet sind. Anschließend wird die Dichtung 4 mit einem Klemmelement (nicht gezeigt) gegenüber dem Gehäuse 2 verpresst. Der Flansch 10 wird zwischen dem Klemmelement und dem Gehäuse 2 eingeklemmt, so dass der Flansch 10 eine Dichtigkeit gegenüber der Öffnung 8 bildet. Die Durchgangsöffnung der Tüllen 6 wird genutzt, um ein Kabel in das Gehäuse 2 hinein zu schieben.

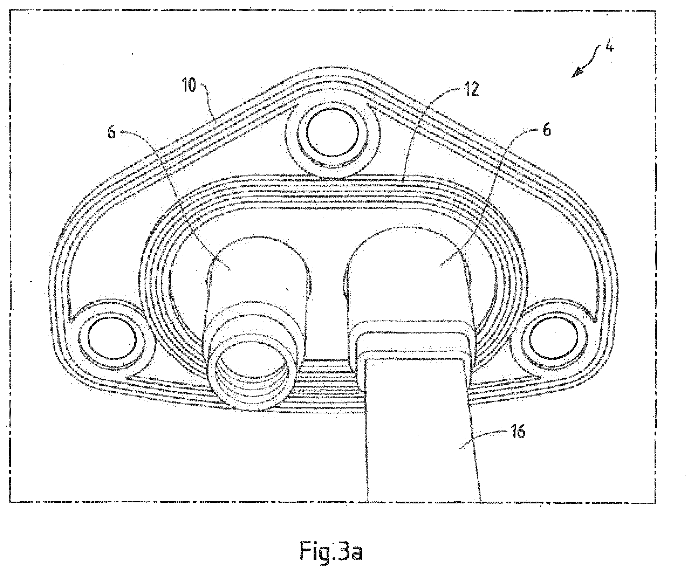

Fig. 3a zeigt die Dichtung 4 gemäß der Fig. 2, bei der ein Flachkabel 16 in eine der Tüllen 6 eingeschoben ist. Wie zu erkennen ist, führt das Flachkabel 16 zu einer Verformung des Querschnitts der Tülle 6. Die Tülle 6 schmiegt sich an das Flachkabel 16 an und bildet an dem Flachkabel 16, insbesondere dessen Isolation, eine längswasserdichte Abdichtung.

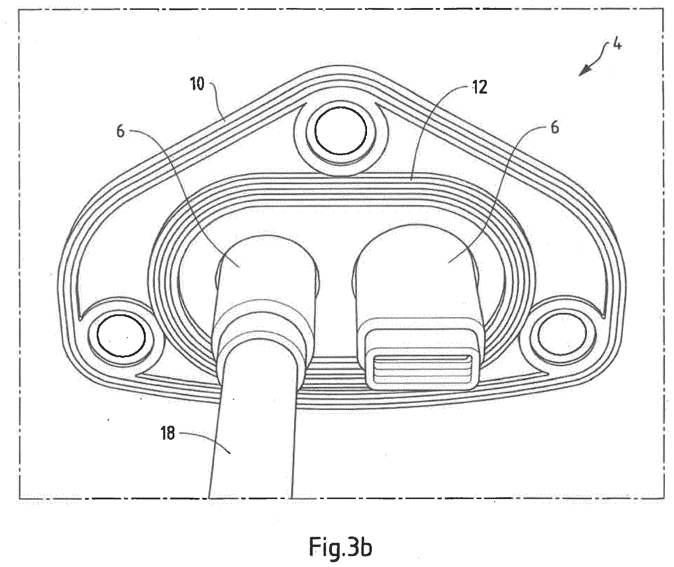

In der Fig. 3b ist eine Dichtung 4 gemäß der Fig. 2 gezeigt, bei der ein Rundkabel 18 in die Tülle 6 eingeschoben ist. Auch hier ist zu erkennen, dass die Tülle 6 sich mit ihrer inneren Mantelfläche an die Isolation des Rundkabels 18 anschmiegt.

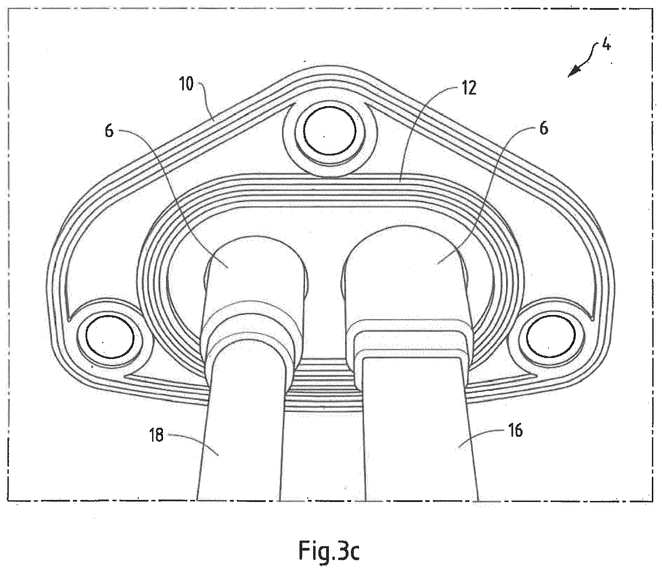

Fig. 3c zeigt ein weiteres Ausführungsbeispiel einer Dichtung 4 gemäß der Fig. 2, bei dem einerseits ein Rundkabel 18 und andererseits ein Flachkabel 16 in jeweils eine der Tüllen 6 eingeschoben ist. Zu erkennen ist, dass die Tüllen 6 zur Aufnahme verschiedenartiger Kabel 16, 18 gebildet sind, wobei gegenständlich durch die Konstruktion der Tüllen 6 eine Längswasserdichtigkeit für die verschiedensten Leitungsquerschnitte erzielt wird.

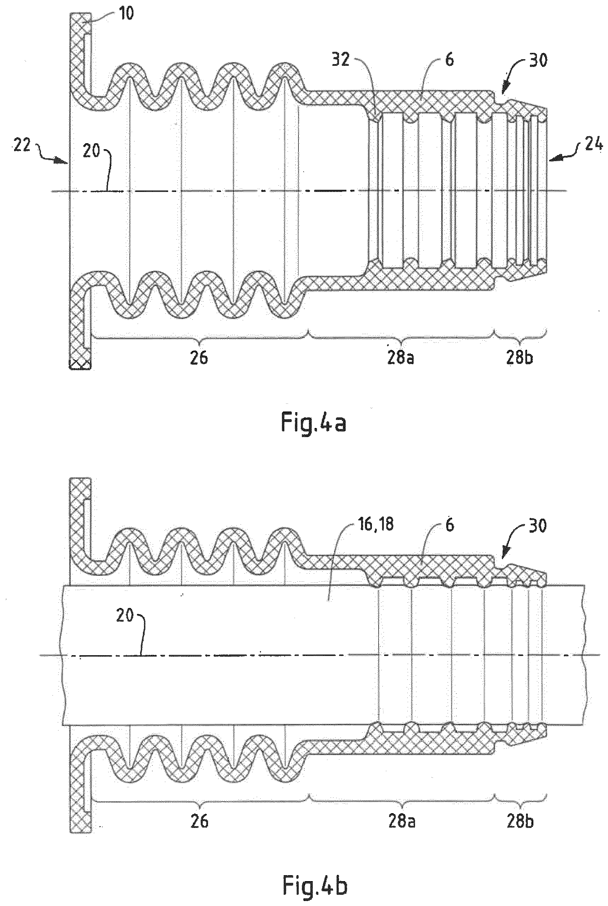

Die Tüllen 6 erstrecken sich in einer Längsrichtung entlang einer Längsachse 20, wie in der Fig. 4a gezeigt ist. Fig. 4a zeigt einen Längsschnitt durch eine Tülle 6 entlang der Längsachse 20. Zu erkennen ist, dass sich die Tülle 6 von einer ersten Stirnseite 22 hin zu einer zweiten Stirnseite 24 erstreckt. An den Stirnseiten 22, 24 hat die Tülle 6 eine Öffnung, die sich zwischen den Stirnseiten 22, 24 durch die Tülle 6 erstreckt. An der ersten Stirnseite 22 kann der Flansch 10 radial nach außen weisend an der Tülle 6 vorgesehen sein. Die Tülle 6 erstreckt sich ausgehend von der ersten Stirnseite 22 entlang der Längsachse 20 in einem optionalen Faltenbalg 26. Ausgehend von dem Faltenbalg 26 erstreckt sich die Tülle 6 in einen ersten Dichtbereich 28a und einen zweiten Dichtbereich 28b, wobei die Dichtbereiche 28a, b durch einen Trennbereich 30 voneinander getrennt sind.

Der Trennbereich 30 zeichnet sich durch eine vorzugsweise vollständig umlaufende, oder auch nur teilweise umlaufende Verjüngung der Materialstärke der Tülle 6 aus. Insbesondere ist der Trennbereich 30 durch eine zumindest teilweise umlaufende Nut gebildet. Durch diesen Trennbereich 30 sind der erste Dichtbereich 28a und der zweite Dichtbereich 28b zumindest teilweise mechanisch entkoppelt, so dass eine Relativbewegung zwischen den Dichtbereichen 28a, b erleichtert wird. Durch diese zumindest teilweise Entkoppelung der Dichtbereiche 28a, b kann jeder Dichtbereich 28a, b eine eigene Dichtwirkung entfalten. Eine Beeinträchtigung der Dichtwirkung eines der Dichtbereiche 28a, b führt nicht unmittelbar zu einer Beeinträchtigung der Dichtwirkung des anderen Dichtbereichs 28a, b. Die Erstreckung des Trennbereichs in Längsrichtung kann so gewählt sein, dass die Nut zur Aufnahme eines Klemmrings, Kabelbinders oder dergleichen geeignet ist. Dadurch kann über die Nut im Bereich des Trennbereichs eine weitere Abdichtung erfolgen.

In jedem der Dichtbereiche 28a, b sind an der inneren Mantelfläche der Tülle 24 in Richtung der Längsachse 20 weisende Dichtlippen 32 vorgesehen. Die Dichtlippen 32 sind in Richtung der Längsachse 20 nebeneinander beabstandet voneinander an der inneren Mantelfläche der Tülle 6 angeordnet. Die Dichtlippen 32 sind vollständig umlaufend an der inneren Mantelfläche. Im eingeschobenen Zustand eines Kabels 16, 18, wie in der Fig. 4b zu erkennen, liegen die Dichtlippen 32 an der äußeren Isolation der Kabel 16, 18 an und bilden somit einen Schutz vor Eintritt vor Längswasser.

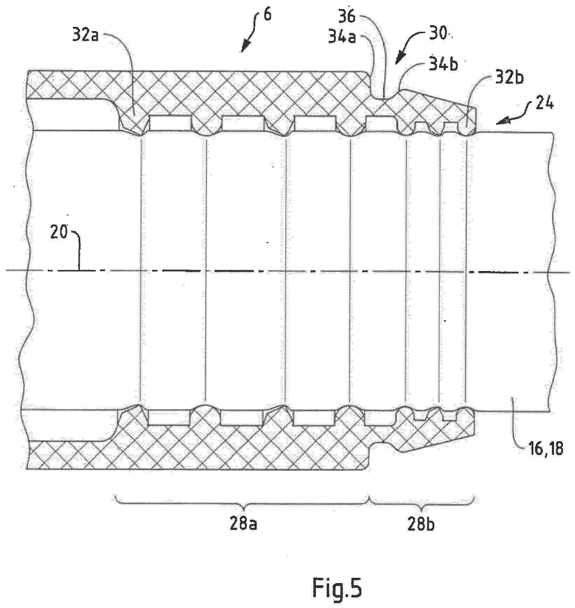

Die Materialstärke der Tülle 6 verjüngt sich im zweiten Dichtbereich hin zur zweiten Stirnfläche, so dass sie sich dort besonders gut an das Kabel anschmiegen kann. Die Gestaltung der Dichtlippen 30 ist in der Fig. 5 näher dargestellt. Auch ist der Trennbereich 30 näher dargestellt.

Fig. 5 ist eine Detaildarstellung der Tülle 6 mit den Dichtbereichen 28a, b. Die Längserstreckung der Dichtbereiche 28a, b kann voneinander verschieden sein, insbesondere kann der der zweiten Stirnseite 24 zugewandte zweite Dichtbereich 28b kürzer sein, als der erste Dichtbereich 28a.

In der Fig. 5 ist zu erkennen, dass die äußere Mantelfläche der Tülle 6 ausgehend von der ersten Stirnseite 22 im Wesentlichen parallel zur Längsachse 20 verläuft. Im Bereich des Trennbereichs 30 kippt die äußere Mantelfläche mit einer ersten Flanke 34a radial nach innen. Der Neigungswinkel der Flanke 34a ist bevorzugt zwischen 45° und 90° zur Längsachse 20. Ausgehend von der ersten Flanke 34 erstreckt sich die äußere Mantelfläche der Tülle 6 hin zu einem Nutgrund 36. Der Nutgrund 36 stellt den Bereich der Trennstelle 30 mit der geringsten Material-/ Wandstärke der Tülle 6 dar. Ausgehend vom Nutgrund 36 verläuft eine zweite Flanke 34b radial nach außen, wobei die Flanke 34b mit einem kleineren Winkel zur Längsachse 20 angestellt ist als die erste Flanke 34a, beispielsweise zwischen 5° und 45°.

Am Ende der zweiten Flanke 34b erstreckt sich die äußere Mantelfläche der Tülle 6 bevorzugt wieder im Wesentlichen parallel zur Längsachse 20, kann jedoch auch mit einer Neigung zwischen 5° und 15° zur Längsachse 20 hin zur zweiten Stirnseite 24 verlaufen. Der Trennbereich 30 stellt eine Einschnürung der Wandstärke der Tülle 6 dar, wodurch eine mechanische teilweise Entkoppelung der Dichtbereiche 28a, b bewirkt wird.

Jeder der Dichtbereiche 28a, b hat Dichtlippen 32a, b. Zu erkennen ist, dass die Dichtlippen 32a im ersten Dichtbereich 28a eine größere Erstreckung sowohl in Längsrichtung 20 als auch quer dazu gegenüber den Dichtlippen 32b im zweiten Dichtbereich 28b haben. Die Dichtlippen 32a, b sind entlang der Längsachse 20 beabstandet voneinander. In dem dargestellten Längsschnitt, der in einer Ebene aufgespannt durch die Längsachse 20 und einem Radius der Tülle 6 liegt, haben die Dichtlippen 32a, b jeweils abwechselnd zueinander unterschiedliche Querschnittsprofile.

Im ersten Dichtbereich 28a wechseln sich spitze Dichtlippen 32a mit rund-/ ballförmigen Dichtlippen 32a ab. Die Dichtlippen 32a haben eine Längserstreckung in einer Erstreckungsrichtung 38. Die Erstreckungsrichtung 38 kann gegenüber einem zur Längsachse 20 verlaufenden Radius 40 um 1° bis 10° geneigt sein. Die Neigung ist bevorzugt in Richtung der ersten Stirnseite 24. Hierdurch wird eine größere Auflagefläche der Dichtlippen 32a auf dem Isolator des Kabels 16, 18 realisiert.

Im ersten Dichtbereich 28a sind vier Dichtlippen 32a vorgesehen, jeweils zwei spitz verlaufende Dichtlippen 32a und zwei runde Dichtlippen 32a.

Im zweiten Dichtbereich 28b können entsprechende Dichtlippen 32b mit bevorzugt kleineren Dimensionierungen, jedoch gleicher Ausrichtung und Profilform gebildet sein. In der Fig. 5 ist zu erkennen, dass sich drei Dichtlippen 32b im Dichtbereich 38b befinden, wobei zwei runde Dichtlippen 32b eine spitz zulaufende Lippe 32b einrahmen. Auch die Dichtlippen 32b können gegenüber einem Radius 40 geneigt sein.

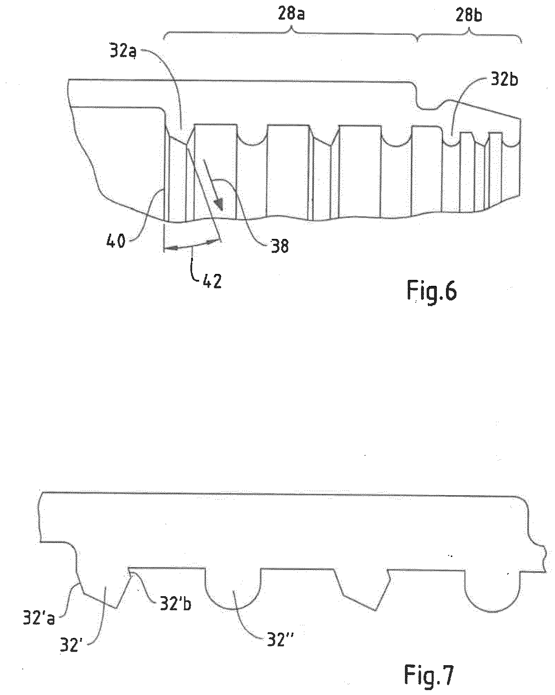

Fig. 6 zeigt schematisch die Neigung der Dichtlippen 32. Zu erkennen ist, dass die Richtung der Längserstreckung 38 zum Radius 40 um einen Winkel 42 geneigt ist. Der Winkel 42 beträgt dabei bevorzugt zwischen 1° und 45°. Insbesondere ist es möglich, dass sich geneigte Dichtlippen 32a und nicht geneigte Dichtlippen 32a einander abwechseln. Die geneigten Dichtlippen 32a sind bevorzugt spitz zulaufend, wohingegen die nicht geneigten Dichtlippen 32a rund/ballig sind.

In dem ersten Dichtbereich 28a können zumindest vier Dichtlippen 32a vorgesehen sein, wobei ausgehend von der ersten Stirnseite 22 geneigte Dichtlippe 32a sich mit nicht geneigten Dichtlippe 32aabwechseln. D.h. in der Längsachse 20 sind die Dichtlippen 32a geneigt/nicht geneigt/geneigt/nicht geneigt. Eine solche intermittierende Abfolge ist bevorzugt für den ersten Dichtbereich 28a. Die Anzahl der Dichtlippen ist insbesondere geradzahlig.

In dem zweiten Dichtbereich 28b kann die Reihenfolge der Dichtlippen 32b anders sein, insbesondere kann eine nicht geneigte Dichtlippe 32b von einer geneigten Dichtlippe 32b gefolgt sein, die wiederum von einer nicht geneigten Dichtlippe 32b gefolgt ist. Die Anzahl der Dichtlippen 32b im zweiten Dichtbereich 28b kann insbesondere ungeradzahlig sein. Die jeweils äußeren Dichtlippen 32b können rund/ballig und nicht geneigt sind.

Fig. 7 zeigt eine Vergrößerung der Dichtlippen 32. Eine geneigte Dichtlippe 32' kann spitz zulaufen und eine erste Seitenwand 32'a, die länger ist, als eine zweite Seitenwand 32'b, haben. Eine zweite Dichtlippe 32" kann rund/ballig im Querschnittsprofil sein, wie in der Fig. 7 dargestellt ist.

In einem Querschnitt, senkrecht zur Längsachse 20 hat die Tülle 6 eine durchgehende Öffnung mit einer lichten Öffnung. In diese lichte Öffnung (lichte Weite) wird das Kabel 18/16 eingeschoben. Die Dichtlippen bilden ein Aufnahmeprofil/ eine lichte Öffnung, in die das Kabel 16/18 eingeschoben werden kann.

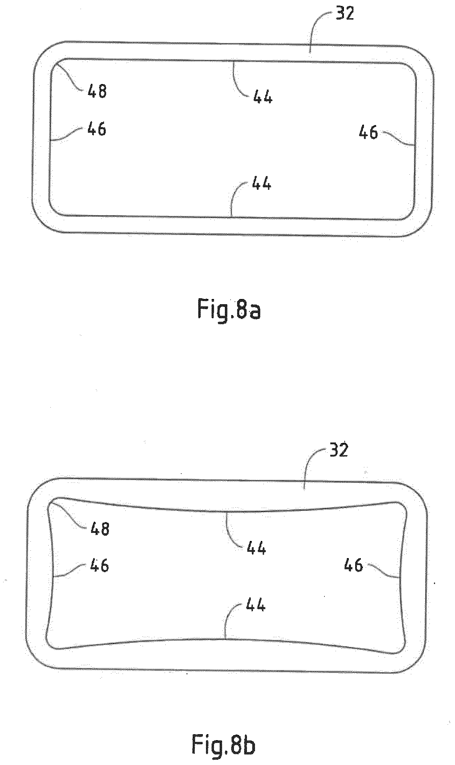

Es wird insbesondere bevorzugt, dass die Dichtlippen 32 abwechselnd unterschiedliche Querschnittsprofile aufweisen. Hierbei wird insbesondere bevorzugt, dass aufeinanderfolgende Dichtlippen 32 unterschiedliche lichte Öffnungen haben, wie durch die Fig. 8a dargestellt ist. Fig. 8a zeigt eine Draufsicht parallel zur Längsachse 20 auf eine Dichtlippe 32, die zwei Längsseiten 44 und zwei Breitseiten 46 aufweist. Die Längsseiten 44 verlaufen ebenso wie die Breitseiten 46 parallel zueinander und gehen in einem Radius 48 ineinander über. Dies kann beispielsweise die Dichtlippe 32' oder die Dichtlippe 32" sein.

Die jeweils andere Dichtlippe 32', 32" ist in der Fig. 8b dargestellt. Hier verlaufen die Längsseiten 44 aufeinander zuweisend nach innen gewölbt und die Breitseiten 46 verlaufen ebenfalls aufeinander zuweisend nach innen gewölbt. Die Übergänge zwischen den Längsseiten 44 und den Breitseiten 46 sind durch Radien 48 gebildet, die kleiner sind als die Radien 48 gemäß der Fig. 8a.

Durch die unterschiedlichen lichten Öffnungen, die einander abwechseln, gemäß der Fig. 8a und 8b, kann insbesondere eine Längswasserdichtigkeit für Kabel mit unterschiedlichen Leitungsquerschnitten, insbesondere Rundkabel und Flachkabel gewährleistet werden.

### Bezugszeichenliste

- 2: Gehäuse
- 4: Dichtung
- 6: Tülle
- 8: Öffnung
- 10: Flansch
- 12: Vorsprung
- 14: Stirnseite
- 16: Flachkabel
- 18: Rundkabel
- 20: Längsachse
- 22, 24: Stirnseite
- 26: Faltenbalg
- 28a, b: Dichtbereich
- 30: Trennbereich
- 32: Dichtlippe
- 34a, b: Flanke
- 36: Nutgrund
- 38: Längserstreckung
- 40: Radius
- 42: Winkel
- 44: Längsseite
- 46: Breitseite
- 48: Radius

## Patentansprüche

1. Dichtung (4) für ein elektrisches Kabel mit
- einer sich in einer Längsrichtung von einer ersten Stirnseite (22) hin zu einer zweiten Stirnseite (24) erstreckenden, einen Durchgangskanal aufweisenden Tülle, wobei der Durchgangskanal durch eine innere Mantelfläche der Tülle umschlossen ist, und
- zumindest zwei in Längsrichtung voneinander beabstandeten, an der inneren Mantelfläche der Tülle angeordneten, nach innen weisenden Dichtlippen (32), wobei
- die Tülle zumindest zwei in Längsrichtung nebeneinander angeordnete, durch einen umlaufenden Trennbereich (30) voneinander beabstandete Dichtbereiche (28a, b) aufweist,
- ein erster Dichtbereich (28a) der Dichtbereiche der ersten Stirnseite (22) zugewandt ist und ein zweiter Dichtbereich (28b) der Dichtbereiche der zweiten Stirnseite (24) zugewandt ist, und
- der Trennbereich (30) eine geringere Wandstärke aufweist als die Dichtbereiche (28a, b),
**dadurch gekennzeichnet,**
- **dass** zwei in Längsrichtung nebeneinander angeordnete Dichtlippen (32) voneinander verschiedene Querschnittsprofile aufweisen, insbesondere dass die Dichtlippen (32) abwechselnde Querschnittsprofile aufweisen, und/oder
- **dass** zwei in Längsrichtung nebeneinander angeordnete Dichtlippen (32) voneinander verschieden zu der Querebene geneigt sind, insbesondere dass die Dichtlippen (32) abwechselnd geneigt sind.

2. Dichtung nach Anspruch 1,
**dadurch gekennzeichnet,**
- **dass** der Trennbereich (30) durch eine umlaufende, radial nach innen weisende Nut gebildet ist, insbesondere dass die Nut eine Hohlkehle ist.

3. Dichtung nach Anspruch 2,
**dadurch gekennzeichnet,**
- **dass** sich die Nut ausgehend von dem ersten Dichtbereich (28a) mit einer radial nach innen verlaufenden ersten Flanke (34a) hin zu dem zweiten Dichtbereich (28b) mit einer radial nach außen verlaufenden zweiten Flanke (34b) erstreckt, wobei die erste Flanke (34a) um einen größeren Winkel zur Längsachse (20) geneigt ist als die zweite Flanke (34b).

4. Dichtung nach einem der vorangehenden Ansprüche,
**dadurch gekennzeichnet,**
- **dass** in jedem der Dichtbereiche (28a, b) zumindest zwei der Dichtlippen (32) angeordnet sind.

5. Dichtung nach einem der vorangehenden Ansprüche,
**dadurch gekennzeichnet,**
- **dass** sich die Wandstärke des zweiten Dichtbereichs (28b) in Richtung der zweiten Stirnseite (24) verjüngt.

6. Dichtung nach einem der vorangehenden Ansprüche,
**dadurch gekennzeichnet,**
- **dass** eine radial nach innen verlaufenden Längsachse der Dichtlippen (32) gegenüber einer senkrecht zu der Längsachse (20) verlaufenden Querebene geneigt sind, insbesondere dass die Dichtlippen (32) in Richtung der zweiten Stirnseite (24) geneigt sind.

7. Dichtung nach einem der vorangehenden Ansprüche,
**dadurch gekennzeichnet,**
- **dass** zumindest eine der Dichtlippen (32) ein spitz zulaufendes Querschnittsprofil aufweist und/oder dass zumindest eine der Dichtlippen (32) ein bogenförmiges Querschnittsprofil aufweist.

8. Dichtung nach einem der vorangehenden Ansprüche,
**dadurch gekennzeichnet,**
- **dass** eine jeweilige der Dichtlippen (32) sich hin zu einer Stirnfläche erstreckende Seitenwände aufweist, wobei eine Seitenwand (32'a) der Seitenwände, die der ersten Stirnseite (22) zugewandt ist länger ist als eine Seitenwand (32'b) der Seitenwände, die der zweiten Stirnseite (24) zugewandt ist.

9. Dichtung nach einem der vorangehenden Ansprüche,
**dadurch gekennzeichnet,**
- **dass** eine jeweilige der Dichtlippen (32) eine lichte Öffnung in dem Durchgangskanal aufspannt, wobei die lichte Öffnung durch zwei einander gegenüberliegende Längsseiten (44) und zwei einander gegenüberliegende Querseiten (46) aufgespannt ist.

10. Dichtung nach Anspruch 9,
**dadurch gekennzeichnet,**
- **dass** ein Übergang zwischen einer Längsseite (44) und einer Querseite(46) einen Innenradius (48) aufweist.

11. Dichtung nach einem der vorangehenden Ansprüche 9 oder 10,
**dadurch gekennzeichnet,**
- **dass** zumindest eine der Längsseiten (44) radial nach innen gewölbt ist und/oder dass zumindest eine der Querseiten (46) radial nach außen gewölbt ist.

12. Dichtung nach einem der vorangehenden Ansprüche,
**dadurch gekennzeichnet,**
- **dass** zwischen dem ersten Dichtbereich und der ersten Stirnseite (22) ein Faltenbalg (26) angeordnet ist.

13. Dichtung nach einem der vorangehenden Ansprüche,
**dadurch gekennzeichnet,**
- **dass** an der ersten Stirnseite (22) ein radial nach außen verlaufender Flansch (10) angeordnet ist.

14. Gehäuse (2) mit einer Dichtung (4) nach einem der vorangehenden Ansprüchen und zumindest einer Öffnung zur Aufnahme von einem Kabel, wobei
- die Tülle von dem Gehäuse (2) abstehend an der Öffnung angeordnet ist oder
- die Tülle in das Gehäuse (2) weisend an der Öffnung angeordnet ist.

15. Gehäuse nach Anspruch 13 und 14,
**dadurch gekennzeichnet,**
- **dass** der Flansch (10) der Tülle zwischen einer Gehäusewand und einem Klemmelement verklemmt ist.

16. System mit einem Gehäuse nach Anspruch 14 mit zwei Öffnungen und zwei an einer jeweiligen der Öffnungen angeordneten Dichtungen (4), wobei eine Tülle einer ersten der Dichtungen (4) ein Rundkabel aufnimmt und eine Tülle einer zweiten der Dichtungen (4) ein Flachkabel aufnimmt.

## Claims

1. Gasket (4) for an electrical cable having
- a grommet extending in a longitudinal direction from a first end face (22) to a second end face (24) and having a through channel, the through channel being enclosed by an inner lateral surface of the grommet, and
- at least two sealing lips (32) which are spaced apart from one another in the longitudinal direction and are arranged on the inner lateral surface of the grommet and point inwards, wherein
- the grommet has at least two sealing regions which are arranged next to one another in the longitudinal direction and are spaced apart from one another by a circumferential separating region (30),
- a first sealing region (28a) of the sealing regions faces the first end face (22) and a second sealing region (28b) of the sealing regions faces the second end face (28b), and
- the separation region (30) has a smaller wall thickness than the sealing regions (28a, b),
**characterized in**
- **that** two sealing lips (32) arranged next to one another in the longitudinal direction have different cross-sectional profiles from one another, in particular in that the sealing lips (32) have alternating cross-sectional profiles, and/or
- **that** two sealing lips (32) arranged next to one another in the longitudinal direction are inclined differently from one another with respect to the transverse plane, in particular in that the sealing lips (32) are alternately inclined.

2. Gasket according to claim 1,
**characterized in**
- **that** the separating region (30) is formed by a circumferential, radially inwardly pointing groove, in particular in that the groove is a fillet.

3. Gasket according to claim 2,
**characterized in**
- **that** the groove extends from the first sealing region (28a) with a radially inwardly extending first slope (34a) to the second sealing region (28b) with a radially outwardly extending second slope (43b), the first slope (34a) being inclined at a greater angle to the longitudinal axis (20) than the second slope (34b).

4. Gasket according to one of the preceding claims,
**characterized in**
- **that** at least two of the sealing lips (32) are arranged in each of the sealing areas (28a, b).

5. Gasket according to one of the preceding claims,
**characterized in**
- **that** the wall thickness of the second sealing region (28) tapers in the direction of the second end face (24).

6. Gasket according to any one of the preceding claims,
**characterized in**
- **that** a radially inwardly extending longitudinal axis of the sealing lips (32) is inclined with respect to a transverse plane extending perpendicularly to the longitudinal axis (20), in particular in that the sealing lips (32) are inclined in the direction of the second end face (24).

7. Gasket according to one of the preceding claims,
**characterized in**
- **that** at least one of the sealing lips (32) has a pointed cross-sectional profile and/or that at least one of the sealing lips (32) has an arcuate cross-sectional profile.

8. Gasket according to any one of the preceding claims,
**characterized in**
- **that** a respective one of the sealing lips (32) has side walls extending towards an end face, wherein a side wall (32'a) of the side walls facing the first end face (22) is longer than a side wall (32'b) of the side walls facing the second end face (24).

9. Gasket according to any one of the preceding claims,
**characterized in**
- **that** a respective one of the sealing lips (32) spans a clear opening in the through channel, the clear opening being spanned by two opposite longitudinal sides (44) and two opposite transverse sides (46).

10. Gasket according to claim 9,
**characterized in**
- **that** a transition between a longitudinal side (44) and a transverse side (46) has an inner radius (48).

11. Gasket according to any one of the preceding claims,
**characterized in**
- **that** at least one of the longitudinal sides (44) is curved radially inwards and/or that at least one of the transverse sides (46) is curved radially outwards.

12. Gasket according to one of the preceding claims,
**characterized in**
- **that** a bellows (26) is arranged between the first sealing region and the first end face (22).

13. Gasket according to one of the preceding claims,
**characterized in**
- **that** a flange (10) extending radially outwardly is arranged on the first end face (22).

14. Housing (2) with a gasket (4) according to one of the preceding claims and at least one opening for receiving a cable, wherein
- the grommet is arranged projecting from the housing (2) at the opening, or
- the grommet is arranged facing into the housing (2) at the opening.

15. Housing according to claim 13 and 14,
**characterized in**
- **that** the flange (10) of the grommet is clamped between a housing wall and a clamping element.

16. System comprising a housing according to claim 14 having two openings and two gaskets (4) disposed at a respective one of the openings, wherein a grommet of a first of the gaskets (4) receives a round cable and a grommet of a second of the gaskets (4) receives a flat cable.

## Revendications

1. Joint (4) pour un câble électrique avec
- une douille s'étendant dans une direction longitudinale d'un premier côté frontal (22) vers un deuxième côté frontal (24), ayant un canal de passage, où le canal de passage est entouré par une surface d'enveloppe intérieure de la douille, et
- au moins deux lèvres d'étanchéité (32) espacées l'une de l'autre dans le sens longitudinal, arrangées sur la surface d'enveloppe intérieure de la douille et orientées vers l'intérieur, où
- la douille a au moins deux zones d'étanchéité (28a, b) disposées l'une à côté de l'autre dans la direction longitudinale et espacées l'une de l'autre par une zone de séparation périphérique (30),
- une première zone d'étanchéité (28a) des zones d'étanchéité est tournée vers le premier côté frontal (22) et une deuxième zone d'étanchéité (28b) des zones d'étanchéité est tournée vers le deuxième côté frontal (24), et
- la zone de séparation (30) a une épaisseur de paroi inférieure à celle des zones d'étanchéité (28a, b),
**caractérisé en ce**
- **que** deux lèvres d'étanchéité (32) disposées l'une à côté de l'autre dans la direction longitudinale ont des profils de section transversale différents l'un de l'autre, en particulier que les lèvres d'étanchéité (32) ont des profils de section transversale alternés, et/ou
- **que** deux lèvres d'étanchéité (32) disposées l'une à côté de l'autre dans la direction longitudinale sont inclinées différemment l'une de l'autre par rapport au plan transversal, en particulier que les lèvres d'étanchéité (32) sont inclinées en alternance.

2. Joint selon la revendication 1,
**caractérisé en ce**
- **que** la zone de séparation (30) est formée par une rainure périphérique orientée radialement vers l'intérieur, en particulier que la rainure est une cannelure.

3. Joint selon la revendication 2,
**caractérisé en ce**
- **que** la rainure s'étend à partir de la première zone d'étanchéité (28a) avec un premier bord (34a) s'étendant radialement vers l'intérieur jusqu'à la deuxième zone d'étanchéité (28b) avec un deuxième bord (34b) s'étendant radialement vers l'extérieur, où le premier bord (34a) est incliné d'un angle plus grand par rapport à l'axe longitudinal (20) que le deuxième bord (34b).

4. Joint selon l'une des revendications précédentes,
**caractérisé en ce**
- **que** dans chacune des zones d'étanchéité (28a, b) sont disposées au moins deux des lèvres d'étanchéité (32).

5. Joint selon l'une des revendications précédentes,
**caractérisé en ce**
- **que** l'épaisseur de paroi de la deuxième zone d'étanchéité (28b) se rétrécit en direction de la deuxième face frontale (24).

6. Joint selon l'une des revendications précédentes,
**caractérisé en ce**
- **qu'**un axe longitudinal des lèvres d'étanchéité (32) s'étendant radialement vers l'intérieur est incliné par rapport à un plan transversal s'étendant perpendiculairement à l'axe longitudinal (20), en particulier que les lèvres d'étanchéité (32) sont inclinées en direction de la deuxième face frontale (24).

7. Joint selon l'une des revendications précédentes,
**caractérisé en ce**
- **qu'**au moins une des lèvres d'étanchéité (32) a un profil de section transversale pointu et/ou en ce qu'au moins une des lèvres d'étanchéité (32) a un profil de section transversale arqué.

8. Joint selon l'une des revendications précédentes,
**caractérisé en ce**
- **qu'**une lèvre respective parmi les lèvres d'étanchéité (32) a des parois latérales s'étendant vers une face frontale, où une paroi latérale (32'a) des parois latérales qui fait face à la première face frontale (22) est plus longue qu'une paroi latérale (32'b) des parois latérales qui fait face à la deuxième face frontale (24).

9. Joint selon l'une des revendications précédentes,
**caractérisé en ce**
- **qu'**une lèvre respective des lèvres d'étanchéité (32) définit une ouverture libre dans le canal de passage, où l'ouverture libre est définie par deux côtés longitudinaux opposés (44) et deux côtés transversaux opposés (46).

10. Joint selon la revendication 9,
**caractérisé en ce**
- **qu'**une transition entre un côté longitudinal (44) et un côté transversal (46) a un rayon intérieur (48).

11. Joint selon l'une des revendications 9 ou 10 précédentes,
**caractérisé en ce**
- **qu'**au moins un des côtés longitudinaux (44) est arqué radialement vers l'intérieur et/ou qu'au moins un des côtés transversaux (46) est arqué radialement vers l'extérieur.

12. Joint selon l'une des revendications précédentes,
**caractérisé en ce**
- **qu'**un soufflet (26) est disposé entre la première zone d'étanchéité et la première face frontale (22).

13. Joint selon l'une des revendications précédentes,
**caractérisé en ce**
- **qu'**une bride (10) s'étendant radialement vers l'extérieur est disposée sur la première face frontale (22).

14. Boîtier (2) avec un joint (4) selon l'une des revendications précédentes et au moins une ouverture pour recevoir un câble, où
- la douille est disposé à l'ouverture en s'écartant du boîtier (2) ou
- la douille est disposé à l'ouverture en étant orienté vers l'intérieur du boîtier (2).

15. Boîtier selon les revendications 13 et 14,
**caractérisé en ce**
- **que** la bride (10) de la douille est serrée entre une paroi du boîtier et un élément de serrage.

16. Système comprenant un boîtier selon la revendication 14 avec deux ouvertures et deux joints (4) disposés sur une ouverture respective des ouvertures, où une douille d'un premier des joints (4) reçoit un câble rond et une douille d'un deuxième des joints (4) reçoit un câble plat.
